# EUROPEAN PATENT APPLICATION

(11) **EP 2 919 368 A2**
(43) Date of publication of application: **16.09.2015**
(21) Application number: 15158698.9
(22) Date of filing: 11.03.2015
(51) Int. Cl.: H02K 5/132, H02K 5/15, H02K 5/22

(54) **Liquid pumping unit made of a submersed electric motor arranged in a support structure**

(30) Priority: 13.03.2014 IT PN20140014
(71) Applicant: Anzanello, Eris, 31040 Chiarano (TV) (IT)
(72) Inventor: Anzanello, Eris, 31040 Chiarano (TV) (IT)
(74) Representative: Dalla Rosa, Adriano

(57) **Abstract**

Liquid pumping unit composed by submersed electric motors (12) enclosed into a support structure formed by a box-like shaped casing (13), and used particularly for actuating in rotation the relative rotors for submersed pumps for pumping liquids, which are joined to the shaft (23, 34) of each motor (12). In the interior of the box-like shaped casing (13) there are enclosed, in addition to the motor (12) and the shaft (23, 34), at least an elastic diaphragm (31) for the compensation of the liquid pressure during the actuation in rotation of the shaft (23, 34) and the pump, and the end portions of the box-like shaped casing (13) are hermetically sealed by means of a relative ring nut (22, 32), which can be bayonet coupled with the box-like shaped casing (13).

Advantages : easy and quick disassembling of the unit, and less component parts utilized as well as less required assembling steps for the same unit.

## Description

The invention relates to a liquid pumping unit composed by submersed electric motors included into a support structure, and by submersed pumps for pumping such liquid into different applications, such pumping unit being realized in a simple constructive manner and easily to be assembled and disassembled.

There are known submersed pumping units composed by the above-mentioned components, and used for being submersed into the liquids introduced into containers for determining the pumping of the same liquid. These pumping units are substantially constituted by at least an actuating asynchronous electric motor coupled with at least a pump, that is composed by a set of overlapped rotors for pumping water and liquid in general.

Such electric motor is inserted, fixed and hermetically included into an external box-like shaped casing of a lengthened shape, generally made of stainless steel, by means of closing pieces fixed to the box-like shaped casing, and realized with various materials such as plastic, stainless steel, etc.. and the motor is also equipped with a flange to be coupled to the pump, and is supported by a suitable supporting structure housed internally to the box-like shaped casing and shaped for supporting in rotation the electric motor and the pump rotors. The closing components are usually fixed to the external casing my means of screws, bolts, threaded bushings, metallic elastic rings or screw stays hooked to other internal components.

These submersed electric motors are supplied by means of electrical conductors passing through through holes provided through one of the closing pieces, in which there are inserted suitable sealing materials, whereas in turn the other closing piece is provided with a flexible membrane for balancing the liquid pressure, that is maintained in position by a set of fixing pieces that are joined to each other by means of bolts or similar fixing means.

However, the so realized submersed pumping units have some drawbacks deriving from their constructive structure. Indeed, at first during the construction process of these motors, the motor supply cable, containing the electrical conductors, is inserted through the through hole of the relative closing piece by means of screws inserted into different positions, which provide for the hermetic tightening of the sealing material to the cable and the through hole, however this tightening is not carried out always with an uniform pressure, thereby involving in the time the risk of damages of the cable and forming cracking therein, with the consequent progressive seepages of the liquid internally the box-like shaped casing and the electrical motor.

Moreover, the other closing piece is made in such a way as to require a complicated assembling and to make sometimes difficult both the correct positioning of the elastic membrane and the hermetic sealing.

The object of the present invention is to overcome the cited drawbacks and limits in the submersed electrical motors of this kind, by means of the use of a support structure for submersed electrical motors which is realized in such a way as to allow both an effective hermetical sealing of the electrical supply cable, and a correct assembling with an hermetical sealing of the elastic membrane, wherein the fixing systems of the various component parts of these submersed pumping units are made simpler and realized with a minimum number of pieces, that may be assembled and disassembled easily and quickly.

This support structure is realized with the constructive characteristics substantially described, with particular reference to the attached patent claims.

The invention will be understood better from the following description, given by way of a not limitative example only and with reference to the accompanying drawings, in which :
- Fig. 1 shows a transversal cutaway front view of the support structure of a pumping unit according to the invention, enclosing an electrical motor and a pump of submersed type ;
- Fig. 2 and 3 respectively show a front view and a perspective front view of the support structure of Fig. 1, with its internal components not visible ;
- Fig. 4 shows a perspective front view of a closing part of an end portion of the support structure of Fig. 1, which part is disassembled from the support structure ;
- Fig. 5 shows a front view of the closing part of Fig. 4 ;
- Fig. 6 shows a perspective front view of the other closing part of the other end portion of the support structure of Fig. 1, which part is disassembled from the support structure ;
- Fig. 7 shows a front view of the closing part of Fig. 6 ;
- Fig. 8 shows a plan view of the closing part of Fig. 5 ;
- Fig. 9 shows a front view of the closing part of Fig. 5, cutaway along the line B-B ;
- Fig. 10 shows a front view of the closing part of Fig. 5, cutaway along the line C-C. ;

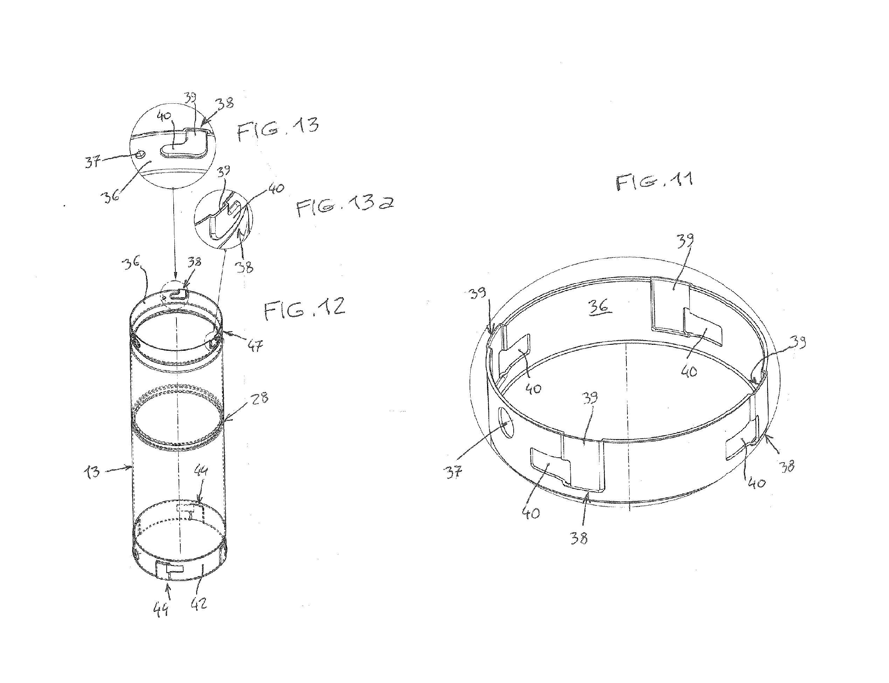

- Fig. 11 shows a perspective front view of a constructive component of the closing part of Fig. 4 ;
- Fig. 12 shows a perspective front view of a constructive component of the closing part of Fig. 7,
- Fig. 13 and 13a show a front view of two constructive items of the component of Fig. 12 ;
- Fig. 14 shows a partially cutaway front view of the support structure of Fig. 1, with an internal component part thereof which is assembled into position ;
- Fig. 15 shows a perspective front view of the support structure of Fig. 14, with its internal component part which is disassembled and extracted from such support structure ;

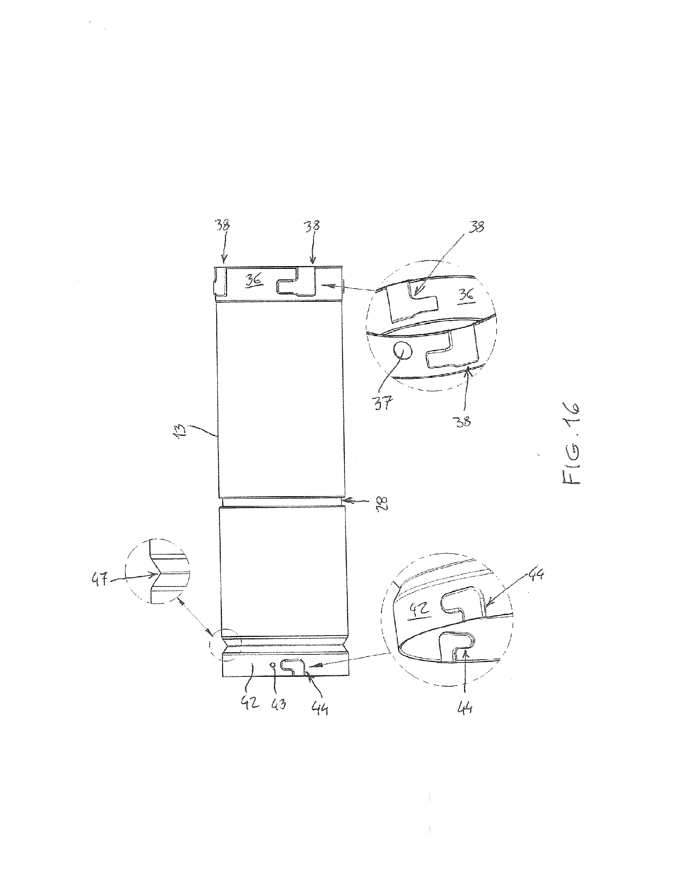

- Fig. 16 shows a front view of the support structure of Fig. 1, with its two closing parts and the circular grooves provided externally to the same structure, with their relative shapes ;
- Fig. 17 shows a front view cutaway in the longitudinal direction of the support structure of Fig. 1, with all its assembled component parts ;
- Fig. 18 shows a perspective front view of the structure of Fig. 17, with some component parts which are disassembled and extracted from the same structure.

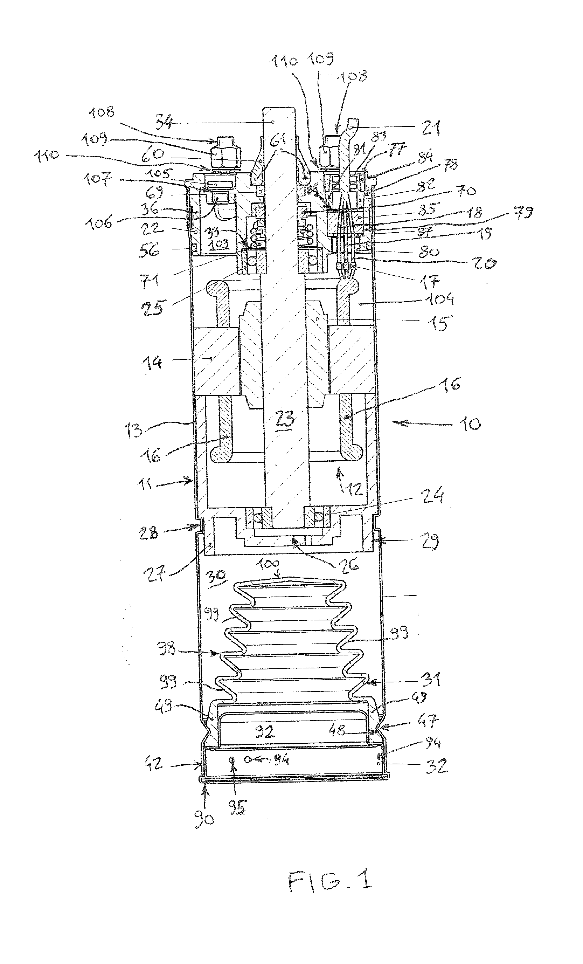

In the Fig. 1 it is shown a liquid pumping unit 10 according to the invention, particularly used for submersed pumps for different uses, and composed by a support structure having a lengthened shape 11, by at least and asynchronous electric motor 12 of the submersed type, which is supported in rotation and coupled with at least a submersed pump (not indicated) adapted to be immersed into liquids for providing for the pumping thereof, in such a way that the pump be actuated in rotation by the electric motor 12. As visible in this Figure, the electric motor 12 is arranged internally of a box-like shaped casing 13 having a lengthened cylindrical shape, forming a part of the support structure 11, and immersed into the dielectric oil contained into the same box-like shaped casing, said electric motor being constituted by a stator 14 and a rotor 15, both housed and fixed internally of the box-like shaped casing, which is shaped as it will be described and is adapted to contain also all the other component parts of the pumping unit, and it is also opened at its two end portions, for allowing at an end portion the insertion of a set of component parts and the subsequent hermetical sealing of the same end portion as it will be described, and at the other end portion the insertion of another component part and the subsequent hermetical sealing of the same end portion as it will be described. In turn, the stator 14 of the electric motor 12 is wound by the electrical windings 16 that are extended in the longitudinal direction of the cylindrical casing 13, for a portion of the same, and are connected by means of connectors 17 to the relative electrical conductors 18, 19 and 20 included into an electric supply cable 21 connected to the A/C electrical supply line, and passing through a closing piece 22 hermetically inserted into the opened end portion of the cylindrical box-like shaped casing 13, that in the example is the upper end portion of this latter, and which closing piece is shaped and assembled and disassembled with respect to such opened end portion as it will be described. Furthermore, the rotor 15 of the electric motor 12 is constituted by a die-cast circular rotor 15 with short circuited bars, which has a diameter smaller than the stator 14 and is supported in rotation by a lengthened rectilinear transmission shaft 23 made of steel, to which rotor the shaft is opportunely fixed, and this shaft 23 is housed and fixed rotatable into respective bearings 24 and 25, of which the bearing 24 is housed centrally into a central seat 26 of a metallic side support 27, formed preferably by aluminium and extended in the axial direction of the box-like shaped casing 13 as well as fixed into position by means of bolts or similar means (not indicated) and also by a circular groove 28 having a rectangular shape, hollowed out by means of appropriate tools for a determined depth into the box-like shaped casing 13, in a position corresponding to a lower terminal portion 29 of the metallic support 27, having a diameter smaller than that one of the remaining portion of the same support. Between the lower end portion of the lower terminal portion 29 and the other opened end portion of the box-like shaped casing 13 it is defined an internal chamber 30, into which a compensation elastic diaphragm 31 is removably housed, which is shaped and operates as it will be described.

In turn, such opened end portion of the box-like shaped casing 13 is hermetically sealed by a further closing piece 32, inserted into the same opened end portion, upon arrangement of the elastic diaphragm 31 into the internal chamber 30, and such closing piece is shaped and assembled and disassembled into the above-mentioned opened end portion as it will be described. Moreover, the other bearing 25 for positioning and supporting in rotation the transmission shaft 23 is centrally housed into a correspondent seat 33 of the closing piece 22, in a position almost central of the same shaft, which is extended upward with a thin shaft portion 34, passing through the closing piece 22 and projected slightly beyond this latter, and which is fixed in position as it will be described, and the free end portion of such shaft portion 34 is then removably coupled with the submersed pump (not indicated), adapted to be immersed into the liquid of the container, for pumping the liquid outward.

In particular, such pump is of traditional type and is composed preferably by a set of overlapped rotors (not indicated) for pumping the liquid, that may be also the water.

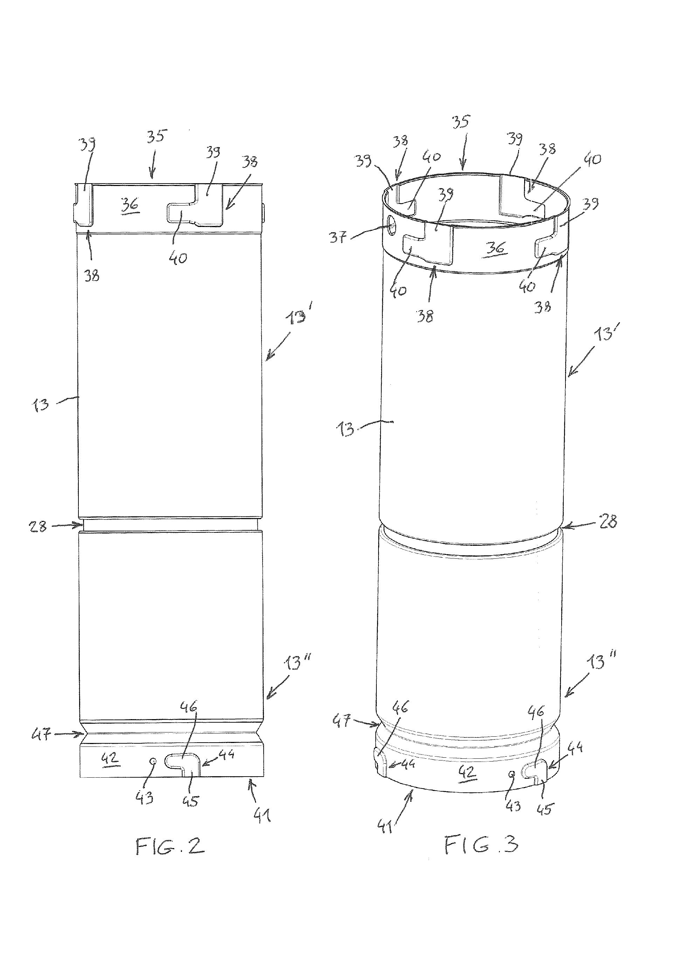

Now, it is described the box-like shaped casing 13, with particular reference to Fig. 2 and 3, from which it is noted that such box-like shaped casing 13 is substantially subdivided by the circular groove 28 into two parts having the same diameter, formed by an upper part 13' into which there are housed and fixed the already described components, namely the electric motor 12, the transmission shaft 23, the metallic support 27 and the lower 24 and upper 25 bearings, and by a lower part 13" in which it is housed and fixed the already described elastic diaphragm 13.

The upper terminal portion 35 of the box-like shaped casing 13 is shaped as a circular cylindrical strip 36 having a limited height, the external diameter of which is slightly greater than the external diameter of the casing 13 and in the wall of which a through hole 37 is provided, the function of which will be described, and along the entire internal surface of the circumference of the circular strip 36 there are provided, for a part of the depth of the strip, some re-entering cavities 38 identical and spaced away to each other with regular intervals along the same circumference, such cavities being protruded outward of the external strip surface and being L-shaped, and formed respectively by a rectangular vertical portion 39 for a part of the height of the strip 36, the upper edge of which coincides with the upper edge of the free end portion of the box-like shaped casing 13, and by a rectangular horizontal portion 40, almost orthogonal to the vertical portion 39, and extended for a part of the length of the circumference. The aim of such L-shaped cavities 38 is to allow the insertion and the bayonet coupling of the relative closing piece 22, in the manner and for the aim that will be described. In turn, also the lower terminal portion 41 of the box-like shaped casing 13 is shaped as a circular cylindrical strip 42 having a limited height, the external diameter of which is slightly greater than the external diameter of the cylindrical casing 13 and in the wall of which a radial and threaded through hole 43 is provided, the function of which will be described, and also in this case along the entire internal surface of the circumference of the circular strip 42 there are provided, for a part of the depth of the strip, some re-entering cavities 44, identical and spaced away to each other with regular intervals along the same circumference, such cavities 44 being protruded outward of the strip external surface and being also L-shaped, and formed respectively by a rectangular vertical portion 45 for a part of the strip height, the lower edge of which coincides with the lower edge of the free end portion of the box-like shaped casing 13, and by a rectangular horizontal portion (46), almost orthogonal to the vertical portion 45, and extended for a part of the length of the circumference.

Also in this case, the aim of such re-entering L-shaped cavities 44 is to allow the insertion and the bayonet coupling of the relative closing piece 32, in the manner and with the aim that will be described. The circular strip 42 is delimited at its upper part by a circular V-shaped groove 47, hollowed out by means of appropriate tools for a determined depth of the box-like shaped casing 13, in a position correspondent to that one of an identical V-shaped groove 48 provided in the enlarged cylindrical terminal portion 49 of the lower end portion of said elastic diaphragm 31, (see Fig. 1), thereby allowing to secure in position the same diaphragm, by inserting into the free end portion of the box-like shaped casing 13 the lower closing piece 32 and by fixing it to both the elastic diaphragm 31 and to such free end portion of the box-like shaped casing 13, as it will be described.

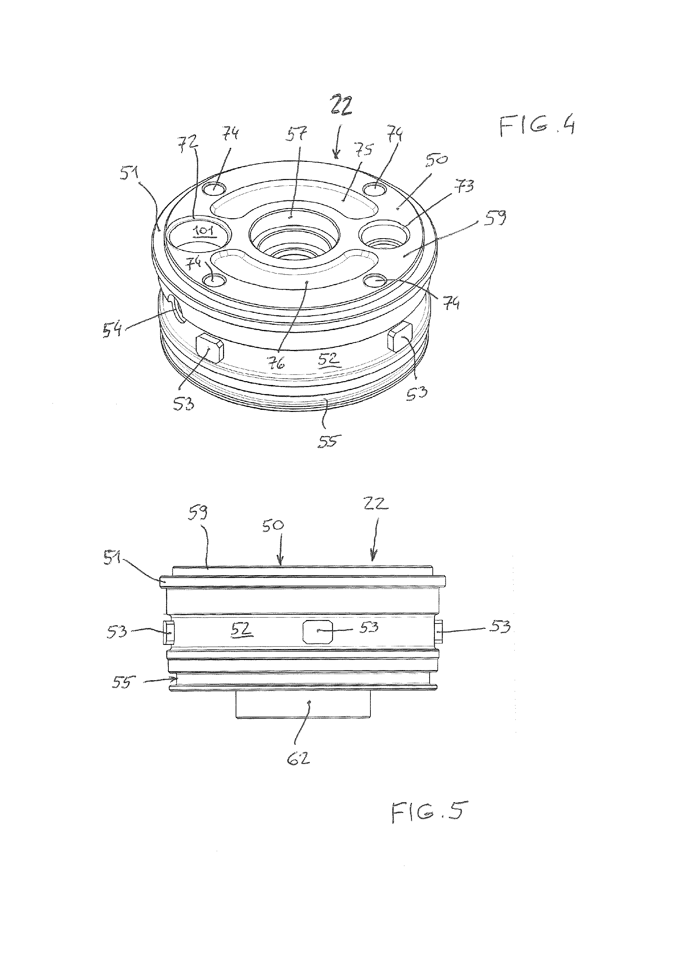

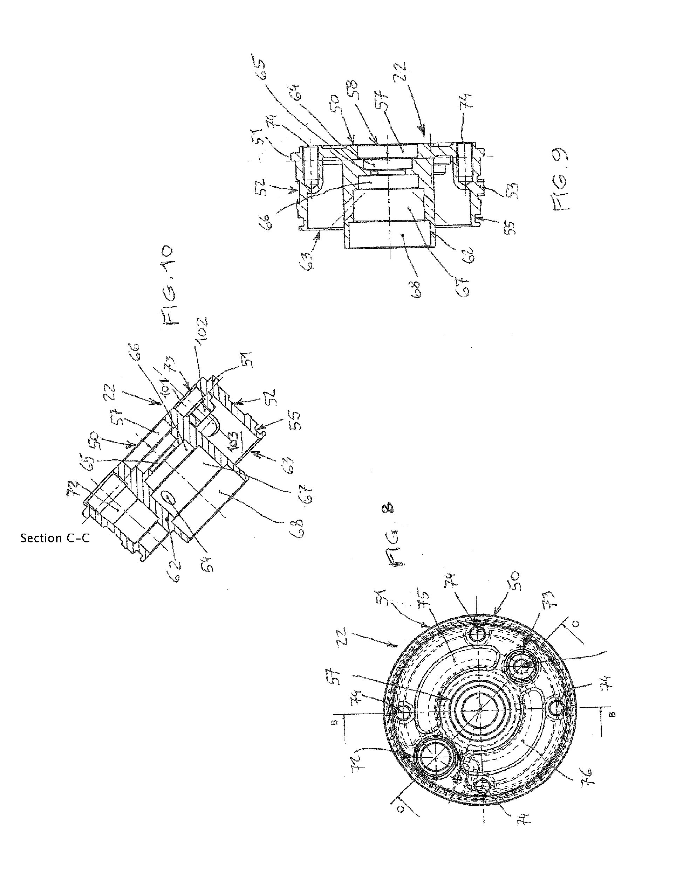

Referring now to Fig. 4, 5, 8, 9 and 10, it is shown the upper closing piece 22 of the liquid pumping unit 10 according to the invention, that is substantially constituted by a circular ring nut 50 with a determinate height and an external diameter dimensioned for being able to be inserted and fixed as it will be described into the correspondent upper terminal end portion of the box-like shaped casing 13. Such circular ring nut 50 is shaped with a stepped external side profile, formed by a thin upper circular ring 51, having a diameter greater than the diameter of the upper opened end portion of the box-like shaped casing 13, and adapted to be laid on to the upper edge of the box-like casing, in the position of the ring nut inserted into such upper opened end portion, and also formed by a central circular cavity 52 having a diameter smaller than the external diameter of the ring nut 50 and into which there are integrally provided some projections 53, spaced away with regular intervals to each other along the circular cavity 52 and realized in number and positions correspondent to those of the L-shaped cavities 38 of the circular strip 36 of the box-like shaped casing 13, and shaped and dimensioned for being able to be adapted by insertion into such L-shaped cavities 38 for coupling the ring nut 50 with the same box-shaped casing. A radial and threaded through hole 54 is also provided into the circular cavity 52, which is adapted to coincide with the radial and threaded through hole 37 provided on to the box-like shaped casing 13, in such a way that in the inserted position of the ring nut 50 into the box-like shaped casing 13, such through holes are shifted in positions coinciding to each other, so as to insert and to screw a correspondent safety screw (not shown) through the same holes, thereby locking the ring nut 50 into the box-like shaped casing 13 and preventing any undesired rotation of the same ring nut.

Finally, the external side profile of the circular ring nut 50 is shaped at its lower part with an additional circular cavity 55, entering the external profile for such a depth as to be able to house a correspondent retaining O-ring 56 (See Fig. 1) made of nitryl rubber, or similar means, adapted to come into close sealing contact with the inner wall of the box-like shaped casing 13, during the assembly of this latter with such closing ring nut 50, thereby performing the function to prevent the passage outward of the dielectric oil contained into said box-like shaped casing.

Into the circular ring nut 50 there are also provided different central and axial circular through holes, for the entire height of the same ring nut, formed by a set of overlapped holes and with diameters different to each other, that will be described, of which the upper hole 57 has an inlet 58 situated at the level of the flat upper edge 59 of the same ring nut, and has a determined diameter and a limited depth, and is provided for housing a sealing piece formed by at least an adequately shaped sealing labyrinth 60 (See Fig. 1), that is arranged around the thin shaft portion 34 for forming a sliding hermetic sealing on to the same, during the rotation thereof, and the lower edges 61 of which are inserted and adequately secured into such upper through hole 57. The remaining central through holes of the ring nut 50 are provided into a cylindrical central sleeve 62 of the same ring nut, that from the upper edge 50 of this latter is extended axially downward, by terminating slightly beyond the lower flat edge 63 of the ring nut, and into said cylindrical sleeve 62 there are provided in succession a second hole 64 and a third hole 65 having decreasing diameters smaller than that of the upper hole 57, as well as a fourth, a fifth and a sixth hole 66, 67 and 68 having respectively increasing diameters, of which the third hole 65 has a diameter slightly greater than that of said shaft portion 34, for housing the same, whereas in the second hole 64 it is housed at least an oil retainer disc 69, into sliding contact with the external surface of said shaft portion 34, for determining respectively an hermetic sealing to the seepages of liquids inwards the box-like shaped casing 13 and for preventing the passage of the dielectric oil contained into the same box-like shaped casing.

In turn, the sixth hole 68 acts as central seat 33 for housing the bearing 25, whereas the fourth hole 66 serves for housing a bearing disc 70 for fixing and abutting of an end portion of a compensation spring 71, that is housed into the entire fifth hole 67 and is hooked and is abutting at the other end portion thereof into a seat (not indicated) fixed over the bearing 25, and the aim of such spring 71 is to be compressed or released during the rotation of the shaft 23 and the submersed pump (not indicated) coupled thereto, so as to compensate the pressure changes that are determined during such rotation. The circular ring nut 50 is also provided with a set of axial holes provided into the upper part of the same, in the concentric direction to said central through holes and entering the same ring nut for different depths, and these holes are substantially constituted by a first and a second enlarged through hole 72 and 73, opposite to each other, and provided for the functions that will be described, as well as by a set of threaded holes identical to each other, in the present case constituted by four blind holes 74 angularly spaced away to each other with the same interval, and provided for the function that will be described.

Finally, onto the upper flat edge 59 of the ring nut 50 there are provided two cavities 75 and 76 having a semi-circular shape in a position opposite to each other, for lighten the weight of the ring nut and reducing the material consumption.

Through the enlarged through hole 72 there are passed and secured the electric supply cable 21 and the relative electrical conductors 18, 19, 20 (See Fig. 1), and for this aim the through hole 72 is shaped for its axial extension initially with a short upper cylindrical portion 77, followed by an intermediate inclined portion 78 with a frusto-conical shape having an inclination converging downward, that in turn is joined with a lower portion 79 with a cylindrical shape, communicating with the cylindrical hole 80 in which the electric conductors 18, 19, 20 are passed. Into the hole intermediate inclined portion 78 there are introduced two semi-cones 81 and 82, identical and symmetrical to each other, and shaped for adapting themselves perfectly into such intermediate hole portion, in a manner that in the complete inserting position thereof their bottom (not indicated) be arranged in the lower area of the inclined wall of said hole inclined portion. These semi-cones 81 and 82, also, delimit between them a central and axial through hole (not indicated), for the passage of the electric supply cable 21, and their upper head 83 is inclined and threaded externally, for being enclosed by a threaded ring nut 84 inserted into the space defined between such head 83 and the internal wall of the hole upper portion 77, so that such ring nut 84 is screwed around the head 83, thereby locking the cable 21 into position.

In turn, the hole lower portion 79 is assigned to house at least a correspondent central plug 85 made of rubber or the like, with the use of two thin washers 86 and 87 made of plastic material, of which the upper washer 86 is placed between the bottom (not indicated) of said semi-cones and the upper surface of said plug, and the lower washer 87 is placed between the lower surface of said plug and the bottom (not indicated) of said hole lower portion, on to which it is laid. The assembly formed by said central plug 85 and the washers 86 and 87 is crossed by a set of axial through holes (not indicated) for the passage of the electrical conductors of the electric supply cable. The assembling into position of the cable 21 and the relative electrical conductors 18, 29, 20, which are inserted in advance through the through holes of the central plug 85, is effected by inserting the ring nut 84 on to the head 83 of the semi-cones 81 and 82 and by screwing it tightly on to the same head, thereby determining the progressive penetration of the semi-cones 81 and 82 into the hole intermediate portion 78, up to such semi-cones are completely penetrated therein, by adhering tightly to the walls of the same intermediate portion and the cable 21, and by compressing the washers 86 and 87 and the central plug 85 too, so as to provide for a perfect hermetic sealing of the enlarged through hole 72 without damaging the cable and preventing any seepage of liquid through such through hole inward the box-like shaped casing 13. Finally, the free end portions of the electrical conductors 18, 19, 20 are fixed with the connectors 17 to the electrical windings 16 of the electric motor 12, that is inserted into the box-like shaped casing 13 from the other free end portion of this latter.

In this way, it is evident the constructive simplicity of the closure of the through hole for the cable 21, that is performed with few component pieces easily and simply adaptable to each other, with an absolute warranty of hermetical sealing and tearing-proof resistance of the same cable, and this without using the component parts till now used for the same function.

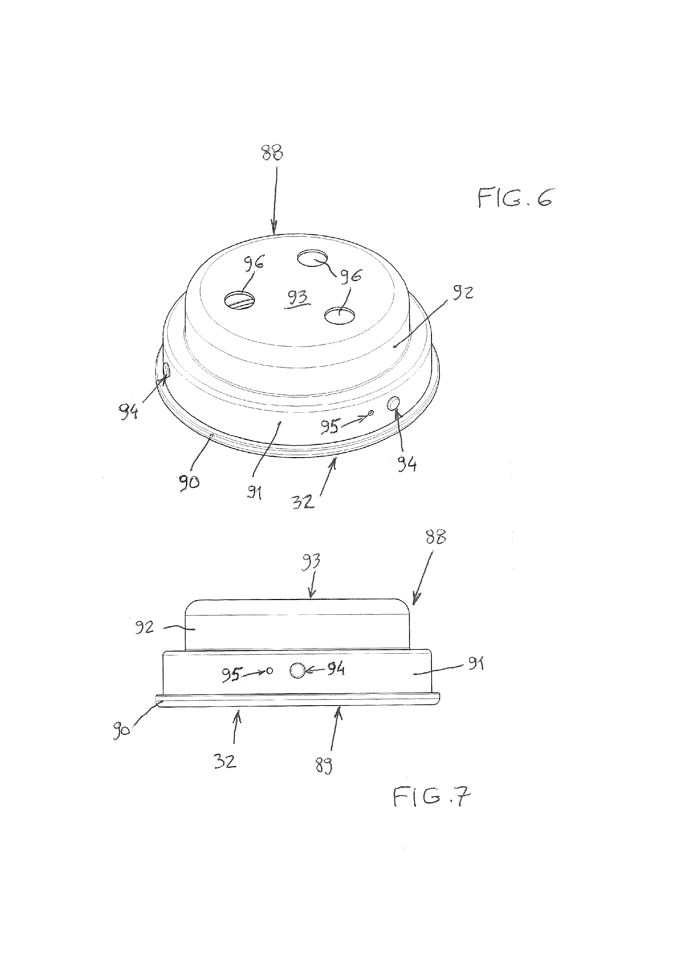

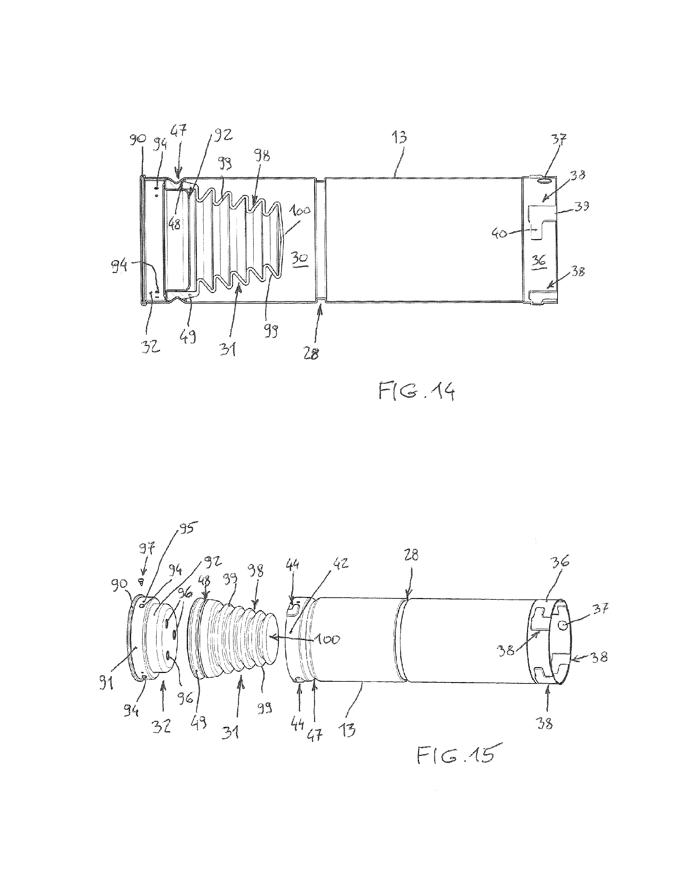

Fig. 6 and 7 show the other closing piece 32, that is arranged and applied as it will be described into the free lower end portion of the box-like shaped casing 13, for hermetically sealing such free end portion. This closing piece 32 is substantially constituted by an additional circular ring nut 88 with a determined height and with an external diameter dimensioned for being able to be inserted and fixed, as it will be described, into the correspondent terminal lower end portion of the box-like shaped casing 13. Such circular ring nut 88 is shaped with an external side profile with a diameter decreasing from the external flat edge 89, and formed by a thin lower circular ring 90, having a diameter greater than the diameter of the opened lower end portion of the box-like shaped casing 13, and adapted to bear against the lower edge of the box-like shaped casing, in the inserted position of the ring nut 88 into such opened lower end portion, and also formed in succession by an intermediate circular ring 91 with a diameter smaller and a height greater than the lower ring 90, and by an upper circular ring 92 with a diameter smaller and almost with the same height than the intermediate circular ring 91, which is joined with the intermediate ring 91 with a flat circular surface and it is also joined with an upper flat terminal wall 93, and said upper ring 92 has such a diameter that to allow itself to be inserted into the opened lower end portion of the box-like shaped casing 13, together with the enlarged lower portion 49 of the elastic diaphragm 31, in a manner that in the inserted position of the elastic diaphragm 31 into the internal chamber 30 of the box-like shaped casing 13 (See Fig. 1), such enlarged portion 49 be enclosed and fixed in position between the external circular edge of the upper circular ring 92 and the circular V-shaped groove 47 of the box-like shaped casing 13. Onto the intermediate circular ring 91 of the ring nut 88 there are also integrally provided three radial projections 94, spaced away angularly at regular intervals to each other, and a radial and threaded through hole 95, whereas three axial through holes 96 are provided in the upper wall 93 of the upper ring 92, which are spaced away angularly from each other, and all these parts are provided for the aims that will be described. In particular, the radial projections 94 are realized in number and positions correspondent to those of the L-shaped cavities 44 of the circular strip 42 of the box-like shaped casing 13, and are shaped and dimensioned for being able to be adapted by insertion into said L-shaped cavities 44, for coupling the ring nut with the same box-like shaped casing. In turn, the threaded and radial through hole 95 is provided in a position adapted to coincide with the threaded and radial through hole 43 provided into the box-like shaped casing 13, in such a way that in the inserted position of the ring nut 88 into the box-like shaped casing 13, said through holes are shifted into positions coinciding to each other, so as to insert and screw a correspondent safety screw 97 (See Fig. 15) through the same holes, thereby locking the ring nut 88 into the box-like shaped casing 13 and preventing any undesired rotation of the same ring nut. Such elastic diaphragm 31, as it is visible particularly from the Fig. 1 and 14, in which it is shown inserted and mounted into the box-like casing 13, and from the Fig. 15 in which it is shown disassembled and extracted with respect of the same box-like shaped casing, it is made of rubber and is shaped almost of a frusto-conical shape, with a corrugated peripheral wall 98 for the entire axial extension thereof, in a manner to form a set of continuous circular rings 99, joined to each other and terminating at an end portion thereof with said enlarged cylindrical portion 49 and at the other end portion thereof with a flat bottom 100, and which have diameters decreasing from said enlarged portion to said flat bottom. Thanks to the corrugated shape as described, the elastic diaphragm 31 may expands and shrinks itself easily during the rotation of the electric motor 12 and the pump, so as to compensate instantaneously and with extreme efficiency and safety the pressure changes which occur in the interior of the box-like shaped casing, owing to the displacement of the lubricating oil contained into this latter, and therefore also in the inner chamber 30, which oil serves to lubricate all the rotating component parts inside the box-like shaped casing 13, and is introduced into this latter as it will be described. Then, in this case the oil is compressed by the elastic deformation of the diaphragm 31 and, by passing through the through holes 96, penetrates into the ring nut 88, thereby compensating and reducing the excessive pressure that otherwise might be formed into the box-like shaped casing 13, that without the presence of the elastic diaphragm 31 could determine so much high internal pressures to damage or even to let the entire pumping unit to explode.

The assembling of the different component parts of the pumping unit is performed in the following manner :
a) the elastic diaphragm 31 is inserted into the internal chamber 30 of the box-like shaped casing 13, with this latter shifted in an upside down turned position with respect to the position shown in Fig. 1, and such diaphragm is inserted until the V-shaped groove 48 of the enlarged cylindrical portion 49 of such elastic diaphragm is coinciding and coupled with the correspondent V-shaped circular groove 47 of the box-like shaped casing 13 ; then, the circular ring nut 88 made of stainless steel is inserted into the opened end portion of the box-like shaped casing 13, and pushed inward until the upper circular ring 92 of the same ring nut is penetrated into the box-like shaped casing 13, and finally the ring nut 88 is coupled with the same box-like shaped casing, by inserting at first the radial projections 94 of the ring nut 88 into the correspondent vertical portions 45 of the L-shaped grooves 44 of the box-like shaped casing 13 and by pushing the ring nut 88 completely inward, until the projections 94 are completely penetrated into the vertical portions 45, and finally by rotating the ring nut 88 in the counterclockwise direction up to let to penetrate completely said radial projections 94 into the relative horizontal portions 46 of the L-shaped grooves 44 of the box-like shaped casing 13, under the condition in which the ring nut 88 is completely penetrated into the box-like shaped casing 13 and on the one hand the enlarged portion 49 of the elastic diaphragm 31 is fixed in position, with its V-shaped groove 48 coinciding with the V-shaped groove 47 of the box-like shaped casing 13, and such enlarged portion 49 of the elastic diaphragm 31 is maintained hermetically compressed on to the box-like shaped casing 13 by the upper circular ring 92 of the same ring nut, and under this condition into the holes coinciding to each other of said ring nut and said box-like shaped casing the safety screw 97 is screwed (See Fig. 15), and on the other hand the lower circular ring 90 of the ring nut 88 is hermetically pushed on to the lower edge of the box-like shaped casing 13.

In this manner, it is clearly evident that with this provision it is performed an hermetic and safe sealing of this end portion of the box-like shaped casing 13, thanks to the coupling between the ring nut 88 and the box-like shaped casing 13, performed as it has been just described, and the ring nut used and coupled in this way allows to perform the functions to enclose the elastic diaphragm 31 in the box-like shaped casing 13, as well as to seal hermetically the lower part of the box-like shaped casing 13, thereby making also the electric motor 12 hermetically sealed into the box-like shaped casing 13, and finally to allow to be able to lay on to the ground, if this is the case, the entire pumping unit. In the current pumping units these functions require the use of two or three component parts.

Naturally, according to the invention it is also possible to perform the removable coupling of the ring nut 88 with the box-like shaped casing 13 with coupling means that are different to those described by way of example, thus without departing from the protection sphere of the present invention.

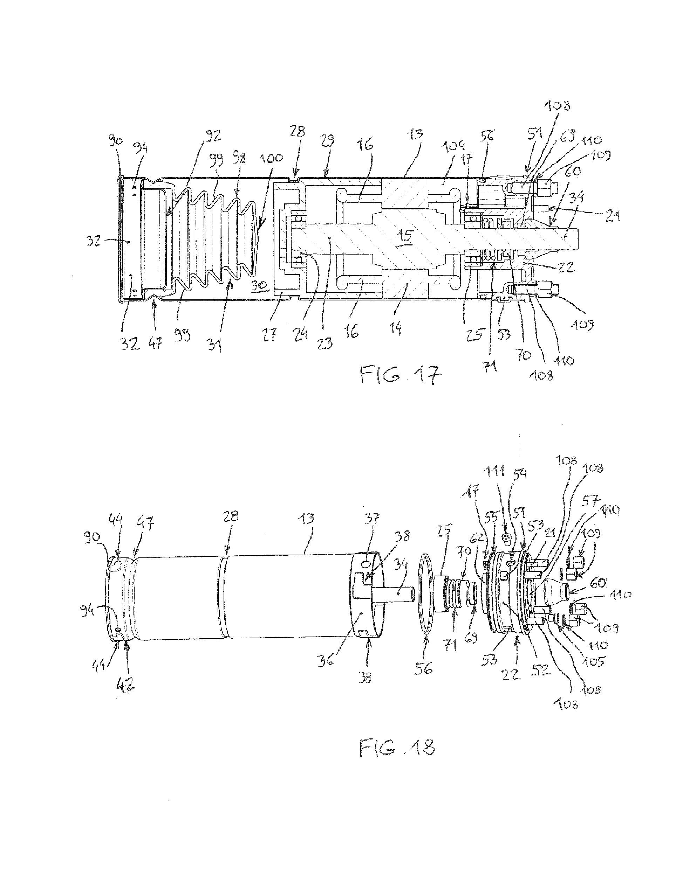

Now, reference is made to the Figs. 1, 4, 5, 8, 9 and 10 again, for showing the other constructive characteristics of the ring nut 22, and to the Figs. 17 and 18 for showing how such characteristics are used in the same ring nut. As it is visible from these Figures, the second enlarged through hole 73 of the ring nut 22 has a re-entering circular seat 101, in which a short vertical and threaded through hole 102 is provided, which is communicating with an underlying inner chamber 103 provided in the interior of the ring nut 22, which is opened at the lower part thereof and in turn communicates with the underlying inner chamber 104 of the box-like shaped casing 13, in which the electric motor 12 is assembled with its different component parts. Into such re-entering seat 101 it is introduced the lubricating oil for all the inner component parts in the box-like shaped casing 13, by passing through the vertical through hole 102, and at the end of filling the oil into the inner chamber 104, the through hole 102 is closed by means of an enlarged stopper 105 provided with a threaded vertical shaft 106, that is screwed into the same through hole, with the interposition of at least a sealing O-ring 107, thereby preventing any undesired oil seepage from such inner chamber 104.

Finally, into the threaded blind holes 74 there are introduced and screwed correspondent cylindrical stud bolts 108 made of stainless steel, onto the upper part thereof there are screwed relative threaded nuts 109 made of stainless steel, with the interposition of correspondent grower split washers 110 made in stainless steel too. The aim of these stud bolts 108 and 109 is to allow to connect the present pumping unit 10 with the pump casing (these components are not shown), for actuating in rotation the same pump by means of the electric motor 12.

The assembling in position of the different component parts of the pumping unit is performed in the following manner, by arranging the box-like shaped casing 13 in the position illustrated in Fig. 1 : at first, the metallic support 27 is introduced into the box-like shaped casing 13 from the opened upper end portion thereof, up to abut with its lower part on to the circular groove 28 provided into the box-like shaped casing 13 and penetrating into the same ; thereafter, the wound stator 14 of the electric motor 12 is inserted into the box-like shaped casing 13 in the same manner, up to be laid with its lower portion onto the upper part of the metallic support 27 ; subsequently, the driving shaft 23, that is die-cast together with the rotor 15, by forming a single body, is inserted with the bearings 24 and 25 into the box-like shaped casing 13, by letting this single body to pass through said wound stator 14 and by housing the lower bearing 24 into the correspondent central seat 26 of the metallic support 27, with the consequently support by this latter of the shaft 23 and the stator 14 and the rotor 15 of the electric motor 12 in the final position.

After that, onto the thin shaft portion 34 there are inserted all the component parts already described and visible from Fig. 1, and adapted to ensure the mechanical seal of the rotating part of the pumping unit, and after this operation it is performed the electrical connection of the conductors 18, 19 and 20 of the wound stator 14 with the supply cable 21, by means of the connectors 17, upon the passage of the same conductors and the cable 21 through the component parts already described, housed into the first enlarged through hole 72 of the upper ring nut 22, and finally such ring nut 22 is arranged and coupled with respect to the opened end portion of the box-like shaped casing 13.

In particular, this latter operation is executed by inserting at first the projections 53 of the ring nut 22 into the correspondent vertical portions 39 of the L-shaped re-entering grooves 38 of the box-like shaped casing 13, and then by pushing the ring nut 22 downward, up to the projections 53 are completely penetrated into such vertical portions 39, by arranging themselves in correspondence of the relative horizontal portions 40 of the L-shaped grooves 38. At this point, the ring nut 22 is rotated in the clockwise direction, up to all the projections 53 are completely penetrated into the relative said horizontal portions 40, under the condition in which the ring nut 22 is assembled in the final position thereof, and the O-ring 56 is pushed on to the internal surface of the box-like shaped casing 13, thereby ensuring the hermetical sealing of the internal chambers 30 and 104 of this latter, while in turn said radial through holes 54 and 37 are shifted in position coincident to each other, so that the relative safety screw 111 (see Fig. 18) may be screwed therein. Under this condition, moreover, also the sealing labyrinth 60 is hermetically pushed on to the thin shaft portion 34, thereby arranging this latter for being coupled with the pump rotating shaft (not shown), that is housed and supported by the casing of the same pump (also not shown). The so prearranged pumping unit is then tested for checking the hermetical sealing outwards of both the internal chambers 30 and 104 of the box-like shaped casing 13 and the shaft 23, and subsequently such internal chambers are filled with lubricant oil as previously described, and the complete operation of the electrical devices of the pumping unit is tested. The so prearranged pumping unit is then coupled with the pump, by coupling the shaft portion 34 with the rotating shaft of the pump by means of at least a traditional coupling (not shown), and such pumping unit is then secured to such pump casing, by inserting and screwing the threaded stud bolts 108 into the correspondent threaded holes of the same casing (these components are not shown too), and finally the nuts 109 are screwed onto the free end portions of the threaded stud bolts 108, thereby locking all the assembly in the position in that the pump may be actuated in rotation for pumping the liquids from the relative containers.

At this point, the pumping unit is ready to operate, and its number plate is laser marked with the characteristics data and then may be packaged and sent to the customers.

Thanks to the use of the ring nuts 22 and 88 which can be coupled and uncoupled easily and quickly with respect to the box-like shaped casing 13, it is so possible to obtain pumping units with lesser fixing parts and lesser number of assembling and construction phases of the components of the same unit. Finally, through the use of components made with the same material (stainless steel), it is reduced the possibility of a possible attack by the wandering currents present in the subsoil that, by means of the electrolytic process, may cause the galvanic corrosion of the external components of the same unit.

## Claims

1. Liquid pumping unit composed by submersed electric motors enclosed into a support structure, and particularly used for actuating in rotation the relative rotors for submersed pumps for pumping liquids, each electric motor (12) being included into a box-like shaped casing (13) forming part of the support structure and being immersed into the dielectric oil contained into the same box-like shaped casing, as well as powered by means of electrical conductors (18, 19, 20) enclosed into at least into an electric supply cable (21), and also adapted to actuate in rotation at least a shaft (23, 34), supported at its end portions by relative bearings (24, 25), and able to be coupled with the rotation shaft of the relative pumps, said box-like shaped casing (13) being closed at its opened end portions by means of first and second closing means (22, 32) fixed hermetically to the same, of which said first closing means (22) are provided with at least a through hole (72) for allowing the passage of said supply cable (21), with the interposition of clamping and closing means for determining the sealing tightness, and said second closing means (32) are adapted to determine the insertion and the securing into said box-like shaped casing (13) of at least an elastic diaphragm (31) for balancing the liquid pressure during the actuation in rotation of said shaft (23) and the pump, the unit being **characterized in that** said bearing (24) is housed centrally into a central seat (26) of a metallic side support (27), formed preferably by aluminium and extended in the axial direction of the box-like shaped casing (13), and also fixed in position by means of per se known fixing means, and also by a circular groove (28) with a rectangular shape, hollowed out by means of appropriate tools for a determined depth into the box-like shaped casing (13), in a position corresponding to a lower terminal portion (29) of said metallic support (27), having a diameter smaller than that of the remaining portion of the same support, and **that** between the lower end portion of said lower terminal portion (29) and the other opened end portion of the box-like shaped casing (13) an internal chamber (30) is defined, into which said compensation elastic diaphragm (31) is housed removably, the other bearing (25) being housed centrally into a correspondent seat (33) of said first closing means (22), in an almost central position of said shaft (23), which is projected upward with a thin shaft portion (34), passing through said first closing means (22) and protruded slightly beyond the same, and the free end portion of which may be coupled removably by means of per se known joining means with the rotation shaft of said submersed pump, for actuating in rotation the same by actuating in rotation said electric motor (12).

2. Pumping unit according to claim 1, **characterized in that** said cylindrical box-like shaped casing (13) is substantially subdivided by the circular groove (28) in two parts having the same diameter, formed by an upper part (13') delimiting an internal chamber (104) into which said electric motor (12, transmission shaft (23), metallic support (27) and bearings (24, 25) are housed, and by a lower part (13") defining said internal chamber (30), and **characterized in that** the upper terminal portion (35) of said box-like shaped casing (13) is shaped like a circular cylindrical strip (36) with a limited height, the external diameter of which is slightly greater than the external diameter of the cylindrical casing (13) and in the wall of which a through hole (37) is provided, and along all the internal surface of the circumference of the circular strip (36) there are provided, for a part of the strip depth, some re-entering cavities (38), identical and spaced away to each other with regular intervals along the same circumference, such cavities being protruded outward of the external strip surface and being L-shaped, and formed respectively by a rectangular vertical portion (39) for a part of the height of the strip (36), the upper edge of which coincides with the upper edge of the free end portion of the box-like shaped casing (13), and by a rectangular horizontal portion (40), almost orthogonal to the vertical portion (39), and extended for a part of the length of the circumference, and **that** also the lower terminal portion (41) of the box-like shaped casing (13) is shaped like a circular cylindrical strip (42) with limited height, the external diameter of which is slightly greater than the external diameter of the cylindrical casing (13) and in the wall of which a radial and threaded through hole (43) is provided, and along all the inner surface of the circumference of the circular strip (42) there are provided, for a parte of the strip depth, some re-entering cavities (44), identical and spaced away to each other with regular intervals along the same circumference, such cavities (44) being protruded outward of the strip external surface and being also L-shaped, and formed respectively by a rectangular vertical portion (45) for a part of the strip height, the lower edge of which coincides with the lower edge of the free end portion of the box-like shaped casing (13), and by a rectangular horizontal portion (46), almost orthogonal to the vertical portion (45), and extended for a part of the length of the circumference, said circular strip (42) being delimited at its upper part by a circular V-shaped groove (47), hollowed out by means of appropriate tools for a determined depth of the box-like shaped casing (13), in a position correspondent to that one of an identical V-shaped groove (48) provided in the enlarged cylindrical terminal portion (49) of the lower end portion of said elastic diaphragm (31), thereby allowing to secure in position of the same diaphragm, by inserting into the free end portion of the box-like shaped casing (13) said second closing means (32) and fixing it to both the elastic diaphragm (31) and to such free end portion of the box-like shaped casing (13).

3. Pumping unit according to claim 2, **characterized in that** said first closing means (22) are substantially constituted by a circular ring nut (50) with a determinate height and an external diameter dimensioned for being inserted and fixed into the correspondent upper terminal end portion of the box-like shaped casing (13), said circular ring nut (50) being shaped with a stepped external side profile, formed by a thin upper circular ring (51), having a diameter greater than the diameter of the upper opened end portion of the box-like shaped casing (13), and adapted to be laid to the upper edge of the circular casing, in the position of the ring nut inserted into such upper opened end portion, and also formed by a central circular cavity (52) with a diameter smaller than the external diameter of the ring nut (50) and into which there are integrally provided some projections (53), spaced away with regular intervals to each other along the circular cavity (52) and realized in number and position correspondent to those of the L shaped cavities (38) of the circular strip (36) of the box-like shaped casing (13), and shaped and dimensioned for being able to be adapted with a bayonet joint into such L shaped cavities (38), for coupling the ring nut (50) with the same box-shaped casing, a radial and threaded through hole (54) being also provided into the circular cavity (52), which is able to coincide with the radial and threaded through hole (37) of the box-like shaped casing (13), in such a way that in the inserted position of the ring nut (50) into the box-like shaped casing (13), such through holes are shifted in position coinciding to each other, so as to insert and to screw a correspondent safety screw (111) through the same holes, thereby locking the ring nut (50) into the box-like shaped casing (13) and preventing any undesired rotation of the same ring nut, said circular ring nut (50) being shaped at its lower part with an additional circular cavity (55), entering the external profile for such a depth as to be able to house a correspondent retaining O-ring (56) made of nitryl rubber, or the like, adapted to come into close sealing contact with the inner wall of the box-like shaped casing (13), during the assembly of this latter with such closing ring nut (50), thereby performing the function to prevent the passage outward of the dielectric oil contained into said box-like shaped casing (13).

4. Pumping unit according to claim 3, **characterized in that** into said circular ring nut (50) there are also provided different central and axial circular through holes, for the entire height of the same ring nut, formed by a set of overlapped holes and with diameters different to each other, of which the upper hole (57) has an inlet (58) situated at the level of the flat upper edge (59) of the same ring nut, and has a determined diameter and a limited depth, and is provided for housing a sealing piece formed by at least an adequately shaped sealing labyrinth (60), that is arranged around said thin shaft portion (34) for forming a sliding hermetic sealing against the same, during the rotation thereof, and the lower edges (61) of which are inserted and adequately secured into such upper through hole (57), and **that** the remaining central through holes of the ring nut (50) are provided into a cylindrical central sleeve (62) of the same ring nut, which is extended axially downward from the upper edge (59) of this latter, by terminating slightly beyond the lower flat edge (63) of the ring nut, and into said cylindrical sleeve (62) there are provided in succession a second hole (64) and a third hole (65) having decreasing diameters smaller than that of the upper hole (57), as well as a fourth, a fifth and a sixth hole (66, 67 and 68) having respectively increasing diameters, of which the third hole (65) has a diameter slightly greater than that of said shaft portion (34), for housing the same, whereas into the second hole (64) at least an oil retainer disc (69) is housed, which is into sliding contact with the external surface of said shaft portion (34), for determining respectively an hermetic sealing against the seepages of liquids inwards to box-like shaped casing (13) and for preventing the passage of the dielectric oil contained into the same box-like shaped casing, and that said sixth hole (68) acts as central seat (33) for housing the bearing (25), whereas the fourth hole (66) is needed for housing a bearing disc (70) for fixing and abutting of an end portion of compensation elastic means (spring) (71), that are housed into all the fifth hole (67) and are hooked and are abutting at the other end portion thereof into a seat fixed over the bearing (25), said compensation spring (71) being adapted to be compressed or released during the rotation of the shaft (23) and the submersed pump coupled thereto, so as to compensate the pressure changes that are determined during such rotation.

5. Pumping unit according to claim 4, **characterized in that** said circular ring nut (50) is also provided with a set of axial holes provided into the upper part of the same, in the concentric direction to said central through holes and entering the same ring nut for different depths, and these holes are substantially constituted by a first and a second enlarged through hole (72, 73), opposed to each other, as well as by a set of threaded holes identical to each other, in the present case constituted by four blind holes (74) angularly spaced away to each other with the same interval, and that onto the upper flat edge (59) of the ring nut (50) there are provided two cavities (75, 76) having a semi-circular shape in a position opposed to each other, for lighten the weight of the ring nut and reducing the material consumption.

6. Pumping unit according to claim 5, **characterized in that** through said first enlarged through hole (72) there are passed and secured the electric supply cable (21) and the relative electrical conductors (18, 19, 20), said through hole (72) being shaped for its axial extension initially with a short upper cylindrical portion (77), followed by an intermediate inclined portion (78) with a frusto-conical shape having an inclination converging downward, that in turn is joined with a lower portion (79) with a cylindrical shape, communicating with the cylindrical hole (80) in which the electric conductors (18, 19, 20) are passed, and that into the hole intermediate inclined portion (78) there are introduced two semi-cones (81, 82), identical and symmetrical to each other, and shaped for adapting themselves perfectly into such intermediate hole portion, in a manner that in the complete inserting position thereof their bottom be arranged in the lower area of the inclined wall of said hole inclined portion, said semi-cones (81, 82) delimiting between them a central and axial through hole, for the passage of the electric supply cable (21), and their upper head (83) being inclined and threaded externally, for being enclosed by a threaded ring nut (84) inserted into the space defined between such head (83) and the internal wall of the hole upper portion (77), so that such ring nut (84) is screwed around the head (83), thereby locking the cable (21) in position, and **characterized in that** said hole lower portion (79) is assigned to house at least a correspondent central plug (85) made of rubber or the like, with the use of two thin washers (86, 87) made of plastic material, of which the upper washer (86) is placed between the bottom of said semi-cones (81, 82) and the upper surface of said plug (85), and the lower washer (87) is arranged between the lower surface of said plug (85) and the bottom of said hole lower portion (79), on to which it is laid, and that the assembly formed by said central plug (85) and the washers (86, 87) is crossed by a set of axial through holes, for the passage of the electrical conductors (18, 19 20) of the electric supply cable (21), and **that** the assembling in position of said cable (21) and the relative electrical conductors (18, 29, 20), which are inserted in advance through the through holes of the central plug (85), is effected by inserting the ring nut (84) on to the head (83) of the semi-cones (81, 82) and by screwing it tightly on to the same head, thereby determining the progressive penetration of the semi-cones (81, 82) into the hole intermediate portion (78), up to such semi-cones are completely penetrated therein, by adhering tightly against the walls of the same intermediate portion and the cable (21), and by compressing the washers (86, 87) and the central plug (85) too, so as to provide for a perfect hermetic sealing of the enlarged through hole (72) without damaging the cable and preventing any seepage of liquid through such through hole inward the box-like shaped casing (13), and finally **characterized in that** the free end portions of the electrical conductors (18, 19, 20) are fixed with the connectors (17) with the electrical coils (16) of the electric motor (12), in its condition inserted into the box-like shaped casing (13).

7. Pumping unit according to the previous claims, **characterized in that** said second closing means (32) are substantially constituted by and additional circular ring nut (88) with a determined height and with an external diameter dimensioned for being able to be inserted and fixed into the correspondent terminal lower end portion of the box-like shaped casing (13), said circular ring nut (88) being shaped with an external side profile with a diameter decreasing from the external flat edge (89), and formed by a thin lower circular ring (90), having a diameter greater than the diameter of the opened lower end portion of the box-like shaped casing (13, and adapted to bear against the lower edge of the box-like shaped casing (13), in the inserted position of the ring nut (88) into such opened lower end portion, and also formed in succession by an intermediate circular ring (91) with a diameter smaller and a height greater than the lower ring (90), and by an upper circular ring (92) with a diameter smaller and almost with the same height than the intermediate circular ring (91), which is joined with the intermediate ring (91) with a flat circular surface and it is also joined with an upper flat terminal wall (93), said upper ring (92) having such a diameter that to allow it to be inserted into the opened lower end portion of the box-like shaped casing (13), together with the enlarged lower portion (49) of the elastic diaphragm (31), in a manner that in the inserted position of the elastic diaphragm (31) into the internal chamber (30) of the box-like shaped casing (13), said enlarged portion (49) be enclosed and fixed in position between the external circular edge of the upper circular ring (92) and the circular V-shaped groove (47) of the box-like shaped casing (13).

8. Pumping unit according to claim 7, **characterized in that** on to said intermediate circular ring (91) of the ring nut (88) there are also integrally provided some radial projections (94), spaced away angularly at regular intervals to each other, preferably three projections, and one radial and threaded through hole (95), whereas various axial through holes (96) are provided in the upper wall (93) of the upper ring (92), preferably three holes, which are spaced away angularly from each other, said radial projections (94) being realized in number and positions correspondent to those of the L-shaped cavities (44) of the circular strip (42) of the box-like shaped casing (13), and are shaped and dimensioned for being able to be adapted by insertion into said L-shaped cavities (44), for coupling the ring nut (88) with the same box-like shaped casing, and that said threaded and radial through hole (95) is provided in a position adapted to coincide with the threaded and radial through hole (43) provided into the box-like shaped casing (13), in such a way that in the inserted position of the ring nut (88) into the box-like shaped casing (13), said through holes (95, 43) are shifted into positions coinciding to each other, so as to insert and screw a correspondent safety screw (97) through the same holes, thereby locking the ring nut (88) into the box-like shaped casing (13) and preventing any undesired rotation of the same ring nut.

9. Pumping unit according to the previous claims, **characterized in that** said elastic diaphragm (31) is made of rubber and is shaped almost of a frusto-conical shape, with a corrugated peripheral wall (98) for the entire axial extension thereof, in a manner to form a set of continuous circular rings (99), joined to each other and finishing at an end portion thereof with said enlarged cylindrical portion (49) and at the other end portion thereof with a flat bottom (100), and which have diameters decreasing from said enlarged portion to said flat bottom, in a manner that thanks to its corrugated shape, said elastic diaphragm (31) may expands and shrinks itself easily during the rotation of the electric motor (12) and the pump, so as to compensate instantaneously and with extreme efficiency and safety the pressure variations occurring in the interior of the box-like shaped casing (13), owing to the displacement of the lubricating oil contained into this latter, and therefore also in the inner chamber (30), which oil serves to lubricate all the rotating component parts inside the box-like shaped casing (13), and is compressed by the elastic deformation of the diaphragm (31) and, by passing through the through holes (96), penetrates into the ring nut (88), thereby compensating and reducing the excessive pressure that otherwise might be formed into the box-like shaped casing (13), that could determine inner pressures so much elevated to damage or even to let the entire pumping unit to explode.

10. Pumping unit according to claim 8, **characterized in that** the coupling of said ring nut (88) with said box-like shaped casing (13) is effected by inserting the same into the opened end portion of the box-like shaped casing (13), and by pressing it inward up to the upper circular ring (92) of the same ring nut be penetrated in the interior of the box-like shaped casing (13), and finally by inserting at first the radial projections (94) of the ring nut (88) into correspondent vertical portions (45) of the L-shaped cavities (44) of the box-like shaped casing (13) and by pushing the ring nut (88) completely inward, up to the projections (94) are penetrated completely into the vertical portions (45), and finally by rotating the ring nut (88) in the counter-clockwise direction up to let said radial projections (94) to penetrate fully into the relative horizontal portions (46) of said L-shaped cavities (44), under the condition in which the ring nut (88) is completely penetrated into the box-like shaped casing (13) and on the one hand the enlarged portion (49) of the elastic diaphragm (31) be fixed in position, with its V-shaped groove (48) coinciding with the V-shaped groove (47) of the box-like shaped casing (13), and such enlarged portion (49) of the elastic diaphragm (31) be maintained hermetically compressed against the box-like shaped casing (13) by the upper circular ring (92) of the same ring nut, and under this condition into the holes coinciding to each other of said ring nut and said box-like shaped casing said safety screw (97) be screwed, and on the other hand the lower circular ring (90) of the ring nut (88) be hermetically pushed against the lower edge of the box-like shaped casing (13).

11. Pumping unit according to the previous claims, **characterized in that** said second enlarged through hole (73) of the ring nut (22) has a re-entering circular seat (101), in which a vertical and threaded short through hole (102) is provided, which is communicating with an underlying inner chamber (103) provided in the interior of the ring nut (22), which is opened at the lower part and in turn communicates with the underlying inner chamber (104) of the box-like shaped casing (13), in which the electric motor (12) is assembled with its different component parts, and **that** into such re-entering seat (101) it is introduced the lubricating oil of all the inner component parts in the box-like shaped casing (13), by passing through the vertical through hole (102), and at the end of filling the oil into the inner chambers (104, 30) of the box-like shaped casing (13), the through hole (102) is closed by means of an enlarged stopper (105) provided with a threaded vertical shaft (106), that is screwed into the same through hole, with the interposition of at least a sealing O-ring (107), thereby preventing any undesired oil seepage from such inner chamber (104).

12. Pumping unit according to the previous claims, **characterized in that** into said threaded blind holes (74) there are introduced and screwed correspondent cylindrical stud bolts (108) made of stainless steel, provided with closing threaded nuts (109) made of stainless steel, and with interposed grower split washers (110), with the aim to allow to fix the present pumping unit (10) with the pump casing, by inserting and screwing the stud bolts (108) into the correspondent threaded holes of the same casing, and finally by screwing the nuts (109) onto the free end portions of the stud bolts (108), thereby locking all the assembly in the position **in that** the pump may be actuated in rotation for pumping liquids from the relative containers.
